# EUROPÄISCHE PATENTSCHRIFT

(11) **EP 4 566 439 B1**
(45) Veröffentlichungstag und Bekanntmachung des Hinweises auf die Patenterteilung: **11.02.2026**
(21) Anmeldenummer: 23214143.2
(22) Anmeldetag: 05.12.2023
(51) Int. Cl.: A01D 78/10

(54) **SYSTEM UND VERFAHREN ZUR LENKUNGSREGELUNG EINES GEZOGENEN SEITENSCHWADERS**
SYSTEM AND METHOD FOR CONTROLLING THE STEERING OF A TOWED SIDE SWATHER
SYSTÈME ET PROCÉDÉ DE COMMANDE DE DIRECTION D'UN ANDAINEUR LATÉRAL REMORQUÉ

(43) Veröffentlichungstag der Anmeldung: 11.06.2025
(73) Patentinhaber: Kverneland Group Kerteminde AS, 5300 Kerteminde (DK)
(72) Erfinder: Stefan, GOHL, 78244 Gottmadingen (DE)
(74) Vertreter: Grünecker Patent- und Rechtsanwälte PartG mbB

(56) Entgegenhaltungen:
- EP-A2- 1 600 052
- DE-A1- 10 011 320
- DE-A1- 10 205 499
- DE-A1- 102005 061 405

## Beschreibung

Die Erfindung betrifft ein System und ein Verfahren zur Lenkungsregelung eines gezogenen Seitenschwaders sowie einen entsprechend ausgestatteten Seitenschwader.

Ein gezogener Zweikreisel-Seitenschwader ist beispielsweise aus der DE 102 05 499 A1 bekannt. Demnach umfasst dieser eine vordere Kreiseleinheit mit einer Zugdeichsel und einer an dieser angelenkten und mit einem Schlepper verbundenen Anhängevorrichtung, eine hintere Kreiseleinheit und einen an die vordere und hintere Kreiseleinheit frei schwenkbar angelenkten Längsträger. Ist die hintere Kreiseleinheit im Arbeitsbetrieb in Fahrtrichtung gesehen bezüglich der vorderen Kreiseleinheit nach links versetzt, wird ein Schwad von der vorderen Kreiseleinheit an die hintere Kreiseleinheit übergeben und von dieser seitlich abgelegt. Der seitliche Versatz der hinteren Kreiseleinheit wird mit einem hydraulischen Lenkzylinder eingestellt und kann bei Linkskurven durch einen zusätzlichen Lenkzylinder korrigiert werden, um den Schwad möglichst vollständig von der vorderen an die hintere Kreiseleinheit zu übergeben. Diese Korrektur wird durch eine Steuervorrichtung eingestellt, die im Bereich der ersten Kreiseleinheit angeordnet ist und beispielsweise in Abhängigkeit von einem zwischen dieser und dem daran angelenkten Längsträger einen Steuerzapfen und eine Schaltkulisse relativ zu einander bewegt.

Nachteilig ist jedoch, dass ein derartiger Steuermechanismus im Bereich der ersten Kreiseleinheit vergleichsweise aufwändig und schwierig zu platzieren ist. Somit muss hierfür gegebenenfalls die Konstruktion der ersten Kreiseleinheit und des zugeordneten Längsträgers grundlegend verändert werden, was beispielsweise ein Nachrüsten von Zweikreisel-Seitenschwadern mit einer solchen Korrekturfunktion erschwert oder gar unmöglich macht.

Eine alternative Steuerung von Lenkzylindern mittels hydraulischer Geberzylinder erfordert zahlreiche hydraulische Komponenten wie Speicherblasen, Ventile oder dergleichen. Auch sind mechanische Komponenten beispielsweise zur jeweiligen Hubbegrenzung für die Erzeugung eines Seitenschwads oder von Einzelschwaden oder für Transportfahrten nötig. All dies bedingt einen erheblichen apparativen Aufwand und benötigt geeigneten Bauraum für die hydraulischen und mechanischen Komponenten.

Es besteht somit Bedarf für demgegenüber verbesserte Systeme und Verfahren zur Lenkungsregelung gezogener Seitenschwader, insbesondere von solchen mit zwei Kreiseleinheiten.

Die gestellte Aufgabe wird mit einem System und einem Verfahren gemäß den unabhängigen Ansprüchen sowie mit einem entsprechend ausgestatteten Seitenschwader gelöst. Bevorzugte Ausführungsformen sind unter anderem in den abhängigen Ansprüchen angegeben.

Das System dient zur Lenkungsregelung eines gezogenen Seitenschwaders, insbesondere Zweikreisel-Seitenschwaders, mit einer vorderen und einer hinteren Kreiseleinheit, die mittels eines Längsträgers gelenkig verbunden sind, und mit einer an der vorderen Kreiseleinheit angeordneten Zugdeichsel. Das System umfasst hierzu: einen ersten Sensor zum Messen eines zwischen dem Längsträger und dem Fahrwerk der hinteren Kreiseleinheit gebildeten Anlenkwinkels; einen zweiten Sensor zum Messen eines zwischen dem Längsträger und der Zugdeichsel gebildeten Nachlaufwinkels; einen hydraulischen Lenkzylinder zum Einstellen des Anlenkwinkels; und eine elektronische Regeleinheit zur Regelung der Hydraulikzufuhr zum Lenkzylinder. Die Regeleinheit ist eingerichtet, die Hydraulikzufuhr derart zu regeln, dass sich der Istwert des Anlenkwinkels in einem wahlweise aktivierbaren ersten Lenkmodus zur Erzeugung eines Seitenschwads laufend einem vom gemessenen Nachlaufwinkel abhängigen ersten Sollwert annähert.

Der Anlenkwinkel kann somit mittels elektronischer Steuerung / Regelung im Fahrbetrieb laufend angepasst und gegebenenfalls korrigiert werden, um die Fahrspur der hinteren Kreiseleinheit bezüglich der vorderen Kreiseleinheit zu optimieren, insbesondere zur optimalen Schwadübergabe von der vorderen an die hintere Kreiseleinheit. Gegenüber hydraulischer und/oder mechanischer Steuerung des Anlenkwinkels kann apparativer Aufwand eingespart werden. Ferner ist auf elektronischem Wege eine flexiblere Spuranpassung für unterschiedliche Fahrsituationen möglich.

Der erste Sensor ist vorzugsweise ein Stellungssensor, der eine Winkelstellung des Längsträgers bezüglich des Fahrwerks der hinteren Kreiseleinheit, beispielsweise in Form eines Drehgebers, oder eine Einfahr-/ Ausfahrstellung des Lenkzylinders misst. Entsprechendes gilt für den zweiten Sensor, dann für eine Winkelstellung bezüglich des Fahrwerks der vorderen Kreiseleinheit bzw. eine Einfahr-/ Ausfahrstellung eines dort zugeordneten, weiteren Lenkzylinders. Dies beruht darauf, dass unterschiedlichen Längenstellungen (Ein-/ Ausfahrstellungen) der Lenkzylinder jeweils bekannte Winkelstellungen des Längsträgers fest zugeordnet sind.

Vorzugsweise ist der erste Lenkmodus derart in der Regeleinheit implementiert, dass die Fahrspur der hinteren Kreiseleinheit bei deren Linksversatz bezüglich der vorderen Kreiseleinheit und bei Kurvenfahrten nach links automatisch zur Kurvenaußenseite hin in Abhängigkeit vom gemessenen Nachlaufwinkel korrigiert wird.

Damit ist eine Überlappungssteuerung möglich, mit der automatisch ein beispielsweise zwischen der Fahrtrichtung der hinteren Kreiseleinheit und der Längsachse des Längsträgers gebildeter Anlenkwinkel verkleinert und der Kurvenradius der hinteren Kreiseleinheit vergrößert werden kann. Dadurch lässt sich eine unvollständige Übergabe des Schwads von der vorderen an die hintere Kreiseleinheit verhindern oder zumindest minimieren. Gleichzeitig kann die sich aus den Arbeitsbreiten der vorderen und hinteren Kreiseleinheiten jeweils zusammensetzende Gesamtarbeitsbreite des Seitenschwaders bei Kurvenfahrten automatisch maximiert werden.

Vorzugsweise ist die Regeleinheit ferner eingerichtet, die Hydraulikzufuhr zum Lenkzylinder so zu regeln, dass sich der Istwert des Anlenkwinkels in einem zweiten wahlweise aktivierbaren Lenkmodus zur Erzeugung von Einzelschwaden einem vom gemessenen Nachlaufwinkel abhängigen zweiten Sollwert annähert.

Vorzugsweise ist die Regeleinheit ferner eingerichtet, die Hydraulikzufuhr zum Lenkzylinder so zu steuern, dass der Anlenkwinkel in einem dritten wahlweise aktivierbaren Lenkmodus für Transportfahrten im Wesentlichen auf null (Ausrichtung des Längsträgers und Fahrtrichtung der hinteren Kreiseleinheit im Wesentlichen identisch) eingestellt und die Hydraulikzufuhr zum Lenkzylinder dann abgesperrt wird.

Der gemessene Anlenkwinkel kann auch als dessen Istwert am ersten Sensor bezeichnet werden. Ebenso entspricht der Istwert des Nachlaufwinkels dem jeweils mit dem zweiten Sensor gemessenen Nachlaufwinkel.

Vorzugsweise ist die Regeleinheit eingerichtet, die Hydraulikzufuhr zum Lenkzylinder so zu steuern, dass sich der Istwert des Nachlaufwinkels in einem vierten wahlweise aktivierbaren Lenkmodus für Rückwärtsfahrten einem vorgegebenen Minimalwert, insbesondere null (Ausrichtung des Längsträgers und Fahrtrichtung der vorderen Kreiseleinheit im Wesentlichen identisch), annähert.

Vorzugsweise umfasst das System ferner einen dritten Sensor zum Messen eines Schubrichtungswinkels (Schubrichtung bei Rückwärtsfahrt) zwischen einer an der vorderen Kreiseleinheit angeordneten Zugdeichsel und einer an einen Schlepper koppelbaren Anhängevorrichtung. Die Regeleinheit ist dann ferner eingerichtet, die Hydraulikzufuhr derart zu steuern, dass: sich der Istwert des Nachlaufwinkels bei Rückwärtsfahrt und Vergrößerung des Schubrichtungswinkels verkleinert und insbesondere Null (Ausrichtung des Längsträgers und Fahrtrichtung der hinteren Kreiseleinheit im Wesentlichen identisch) annähert; die Hydraulikzufuhr nur dann aktiviert wird, wenn mittels des dritten Sensors eine Kurvenfahrt festgestellt wird; und/oder die Hydraulikzufuhr zum einen nicht im Stillstand (nur bei fahrendem Kreiselschwader) und zum anderen proportional zur Fahrgeschwindigkeit erfolgt.

Der beispielsweise als Drehgeber (Winkelsensor) ausgebildete dritte Sensor misst die Winkelstellung zwischen der Zugdeichsel und der Anhängevorrichtung oder der Fahrtrichtung des Schleppers (Schubrichtungswinkel der Rückwärtsfahrt) vorzugsweise direkt.

Das System kann zudem einen vierten Sensor zum Erkennen und/oder Überwachen von Rückwärtsfahrten umfassen, der dann insbesondere zum berührungslosen Abtasten des befahrenen Untergrunds ausgebildet ist, beispielsweise optisch oder mittels Radar.

Der Seitenschwader umfasst ein System gemäß wenigstens einer der beschriebenen Ausführungsformen und einen Anschluss zum Verbinden der Regeleinheit mit einem insbesondere an einem Schlepper angeordneten und/oder im Form eines Mobilfunkgeräts bereitgestellten Bedienterminal. Das Bedienterminal könnte aber auch an der Regeleinheit oder anderweitig am Kreiselschwader angeordnet sein.

Das Verfahren dient zur Lenkungsregelung eines gezogenen Seitenschwaders, insbesondere Zweikreisel-Seitenschwaders, mit einer vorderen und einer hinteren Kreiseleinheit, die mittels eines Längsträgers gelenkig verbunden sind, und mit einer an der vorderen Kreiseleinheit angeordneten Zugdeichsel, wobei jeweils laufend, also in geeigneten Zeitabständen wiederholt: ein Istwert eines zwischen dem Längsträger und dem Fahrwerk der hinteren Kreiseleinheit gebildeten Anlenkwinkels gemessen wird; ein Istwert eines zwischen dem Längsträger und der Zugdeichsel gebildeten Nachlaufwinkels gemessen wird; der Anlenkwinkel mittels eines hydraulischen Lenkzylinders eingestellt wird; und die Hydraulikzufuhr zum Lenkzylinder elektronisch geregelt wird. Ferner wird die Hydraulikzufuhr derart geregelt wird, dass sich der Istwert des Anlenkwinkels infolge einer Aktivierung eines ersten elektronisch implementierten Lenkmodus zur Erzeugung eines Seitenschwads laufend einem vom jeweiligen Istwert des Nachlaufwinkels abhängigen ersten Sollwert annähert.

Damit lassen sich die bezüglich des System beschriebenen Vorteile erzielen.

Der Anlenkwinkel kann mit einem Stellungssensor als Winkelstellung des Längsträgers bezüglich des Fahrwerks der hinteren Kreiseleinheit (direkt) oder als Längenstellung (Einfahr- bzw. Ausfahrstellung) des Lenkzylinders (indirekt) gemessen werden. Entsprechendes gilt für die Messung des Nachlaufwinkels, dann bezüglich des Fahrwerks der vorderen Kreiseleinheit bzw. eines dort zugeordneten, weiteren Lenkzylinders.

Vorzugsweise wird demzufolge im ersten Lenkmodus die Fahrspur der hinteren Kreiseleinheit bei deren Linksversatz bezüglich der vorderen Kreiseleinheit und bei Kurvenfahrten nach links automatisch in Abhängigkeit vom Ist-Wert des Nachlaufwinkels, in Fahrtrichtung gesehen, nach rechts hin korrigiert.

Vorzugsweise wird die Hydraulikzufuhr infolge einer Aktivierung eines zweiten elektronisch implementierten Lenkmodus zur Erzeugung von Einzelschwaden derart geregelt, dass sich der Istwert des Anlenkwinkels einem vom Ist-Wert des Nachlaufwinkels abhängigen zweiten Sollwert annähert.

Vorzugsweise wird die Hydraulikzufuhr infolge einer Aktivierung eines dritten elektronisch implementierten Lenkmodus für Transportfahrten derart gesteuert, dass der Istwert des Anlenkwinkels im Wesentlichen auf null eingestellt und die Hydraulikzufuhr zum Lenkzylinder dann abgesperrt wird.

Vorzugsweise wird die Hydraulikzufuhr infolge einer Aktivierung eines vierten elektronisch implementierten Lenkmodus für Rückwärtsfahrten derart gesteuert, dass sich der Istwert des Nachlaufwinkels einem vorgegebenen Minimalwert, insbesondere null, annähert.

Vorzugsweise wird ein zwischen einer an der vorderen Kreiseleinheit angeordneten Zugdeichsel und einer an einen Schlepper koppelbaren Anhängevorrichtung gebildeter Schubrichtungswinkel gemessen. Die Hydraulikzufuhr wird dann ferner derart gesteuert, dass sich der Istwert des Nachlaufwinkels bei Rückwärtsfahrt und Vergrößerung des Schubrichtungswinkels verkleinert und insbesondere null annähert.

Vorzugsweise wird der erste Lenkmodus an einem Bedienterminal aktiviert, welches an einem den Seitenschwader ziehenden Schlepper angeordnet ist und/oder per Funkverbindung angeschlossen ist. Dies gilt vorzugsweise auch für den zweiten bis dritten Lenkmodus, sofern der jeweilige Lenkmodus implementiert ist.

Die beschriebenen Richtungen für Spurversatz, Spurkorrektur, Kurvenrichtung, Kreiseldrehung oder dergleichen, beispielsweise zur Erzeugung eines Seitenschwads oder Einzelschwaden, ließen sich jeweils in Gänze auch spiegeln (Vertauschung von rechts / links).

Bevorzugte Ausführungsformen der Erfindung sind zeichnerisch dargestellt. Es zeigen:
- Fig. 1: ein schematisches Schaltbild des Systems;
- Fig. 2: eine schematische Draufsicht auf einen Kreiselschwader mit dem System bei Linkskurvenfahrt; und
- Fig. 3: eine Draufsicht auf eine konstruktive Ausgestaltung des Kreiselschwaders in Geradeausstellung beispielsweise bei einer Transportfahrt.

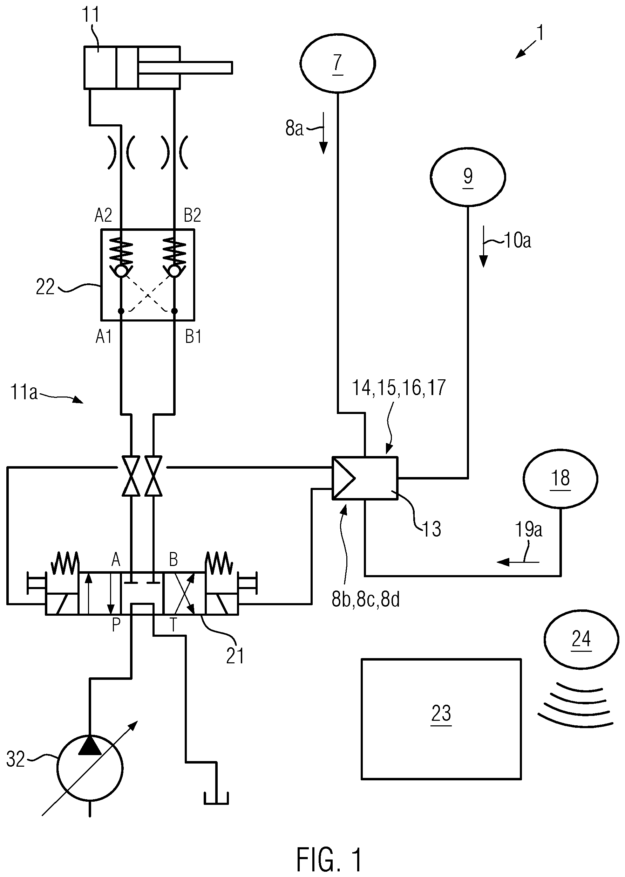

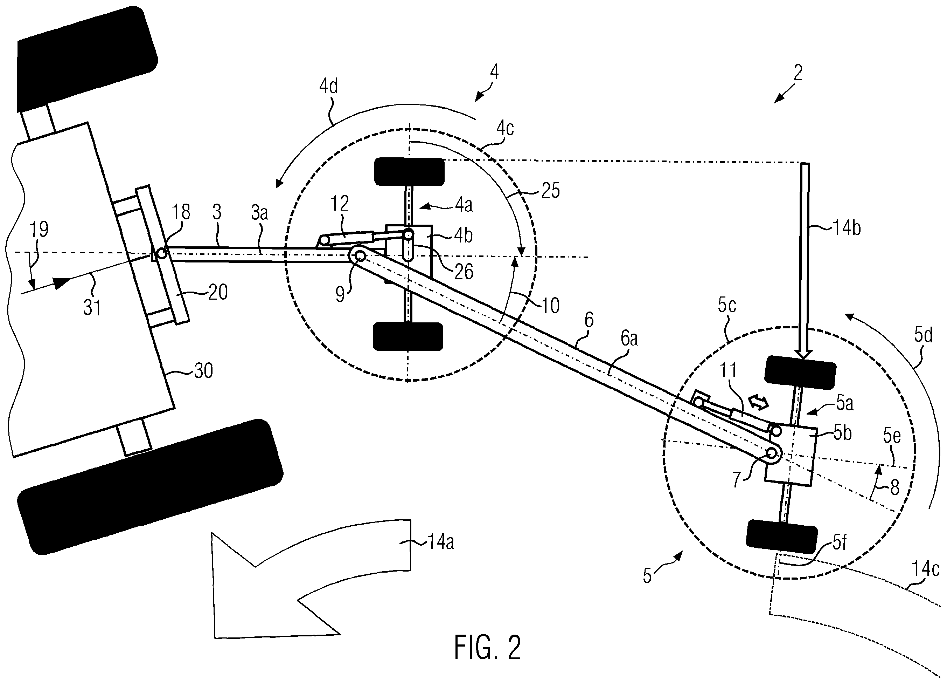

Wie die Fig. 1 und 2 in der Zusammenschau erkennen lassen, ist das System 1 zur Lenkungsregelung einem gezogenen Seitenschwader2 zugeordnet, welcher der Einfachheit halber hier auch nur als Seitenschwader 2 bezeichnet wird und im einfachsten Fall als Zweikreisel-Seitenschwader ausgebildet ist.

Der Seitenschwader 2 umfasst eine Zugdeichsel 3 und eine damit auf prinzipiell bekannte Weise verbundene vordere Kreiseleinheit 4 mit einem Fahrwerk 4a, einer Kreiselaufnahme 4b und einem sich darauf drehenden Rechenkreisel 4c mit Drehrichtung 4d im Gegenuhrzeigersinn. Der Seitenschwader 2 umfasst zudem wenigstens eine hintere Kreiseleinheit 5 mit einem Fahrwerk 5a, einer zugehörigen Kreiselaufnahme 5b und einem Rechenkreisel 5c mit Drehrichtung 5d im Gegenuhrzeigersinn. Für Ausführungsformen mit Drehrichtung der Rechenkreisel 4c, 5c im Uhrzeigersinn gilt die Beschreibung entsprechend spiegelbildlich.

Die vordere und hintere Kreiseleinheit 4, 5 sind durch einen Längsträger 6 seitlich schwenkbar aneinandergekoppelt, hier mittelbar über die Zugdeichsel 3. Das heißt, die Zugdeichsel 3 oder die damit verbundene vordere Kreiselaufnahme 4b zieht die hintere Kreiseleinheit 5 mittels des Längsträgers 6 im normalen Fahrbetrieb hinter sich her.

Das System 1 umfasst einen ersten Sensor 7, mit dem ein zwischen dem Längsträger 6 und dem Fahrwerk 5a bzw. der Kreiselaufnahme 5b der hinteren Kreiseleinheit 5 gebildeter Anlenkwinkel 8 gemessen wird, und einen zweiten Sensor 9, mit dem ein zwischen dem Längsträger 6 und der Zugdeichsel 3, dem Fahrwerk 4a und/oder der Kreiselaufnahme 4b der vorderen Kreiseleinheit 4 gebildeter Nachlaufwinkel 10 gemessen wird.

Der Anlenkwinkel 8 ist hier zwischen der Längsachse 6a des Längsträgers 6 und der jeweiligen Fahrtrichtung 5e der hinteren Kreiseleinheit 5 ausgebildet, könnte prinzipiell aber auch zwischen der Längsachse 6a und der Achsrichtung 5f des hinteren Fahrwerks 5a definiert sein.

Der erste Sensor 7 ist beispielsweise an einer den Längsträger 6 mit der hinteren Kreiseleinheit 5 verbindenden Gelenkachse und/oder der zweite Sensor 9 an einer den Längsträger 6 mit der vorderen Kreiseleinheit 4 verbindenden Gelenkachse angeordnet, wie beispielhaft angedeutet ist. Der erste und/oder zweite Sensor 7, 8 ist dann als Drehgeber (Winkelsensor) zur Messung der jeweiligen Winkelstellung ausgebildet.

Das System 1 umfasst einen ersten hydraulischen Lenkzylinder 11 zum Einstellen des Anlenkwinkels 8. Der erste Lenkzylinder 11 ist beispielsweise in prinzipiell bekannter Weise am Längsträger 6 und an der Kreiselaufnahme 5b der hinteren Kreiseleinheit 5 angelenkt und somit auch mit deren Fahrwerk 5a bzw. der Kreiselaufnahme 5b lenkend verbunden.

Der Kreiselschwader 2 umfasst optional einen zweiten hydraulischen Lenkzylinder 12 zum prinzipiell bekannten Einstellen eines Anstellwinkels 25 zwischen dem Fahrwerk 4a der vorderen Kreiseleinheit 4 und der Längsachse 3a der Deichsel 3. Der zweite Lenkzylinder 12 ist an der Deichsel 3 angelenkt. Der Anstellwinkel 25 ermöglicht einen Querversatz zwischen Traktorspur und der Spur der vorderen Kreiseleinheit 4 nach rechts oder links.

Der Nachlaufwinkel 10 ist beispielsweise zwischen der Längsachse 3a der Zugdeichsel 3 und der Längsachse 6a des Längsträgers 6 definiert. Die beiden Lagerpunkte des zweiten Lenkzylinders 12 befinden sich dann vorzugsweise an der Deichsel 3 und an einem Steuerhebel 26, der über die Drehachse des Rechenkreisels 4c der vorderen Kreiseleinheit 4 mit deren Fahrwerk 4a lenkend verbunden ist. Der zweite Lenkzylinder 12 kann auf prinzipiell bekannte Weise manuell gesteuert werden.

Aus der beidseitig schwenkbaren Lagerung des ersten Lenkzylinders 11 folgt, dass der erste Sensor 7 anstelle einer Winkelstellung auch eine Längenstellung (Ein-/ Ausfahrstellung) des ersten Lenkzylinders 11 messen könnte, wovon die jeweilige Winkelstellung und damit der Anlenkwinkel 8 dann eindeutig abgeleitet werden kann. Auch dies ist als eine (in diesem Fall indirekte) Messung des Anlenkwinkels 8 des beschriebenen Regelungsverfahrens zu verstehen.

Wie in der Fig. 1 schematisch angedeutet ist, umfasst das System 1 eine elektronische Regeleinheit 13 zur Steuerung / Regelung der Hydraulikzufuhr 11a (Fig. 1) zum ersten Lenkzylinder 11. Während die Sensoren 7, 9 und der erste Lenkzylinder 11 zwangsläufig Bestandteile des Seitenschwaders 2 sind, könnte die Regeleinheit 13, obwohl sie Bestandteil des Systems 1 ist, prinzipiell auch außerhalb des Seitenschwaders 2 angeordnet sein, beispielsweise an einem zugeordneten Schlepper 30 (Fig. 2). Eine Anordnung am Seitenschwader 2 ist zur vereinfachten Leitungsführung beispielsweise mittels ISOBUS aber vorteilhaft.

Die elektronische Regeleinheit 13 verrechnet zur beschriebenen Lenkungsregelung laufend, also in geeigneten zeitlichen Abständen wiederholt, mit dem ersten Sensor 7 gemessene Istwerte 8a des Anlenkwinkels 8 und mit dem zweiten Sensor 9 gemessene Istwerte 10a des Nachlaufwinkels 10. Die zugehörige Signalübertragung erfolgt vorzugsweise mittels Verdrahtung, beispielsweise per ISOBUS, wäre prinzipiell aber auch drahtlos mittels Funkverbindung möglich.

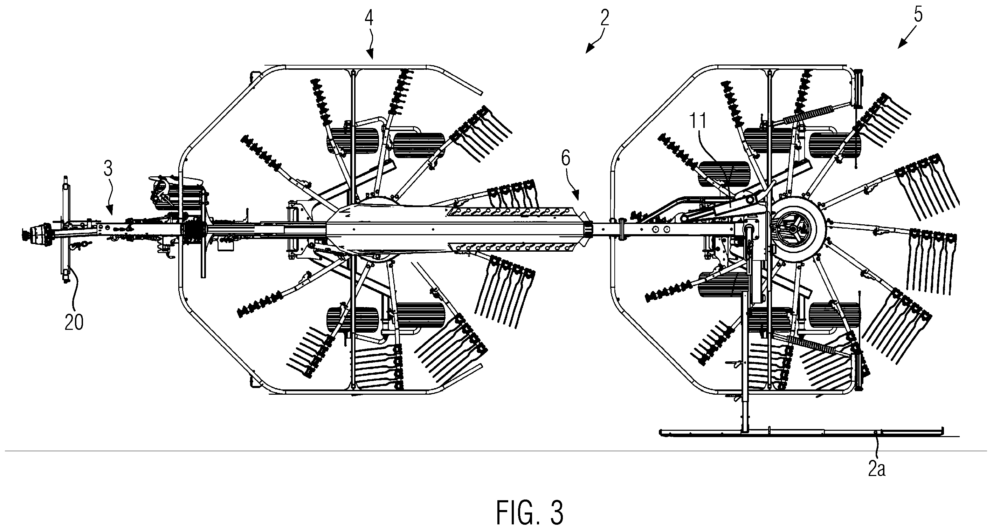

In der Regeleinheit 13 ist durch geeignete Programmierung wenigstens ein erster, wahlweise aktivierbarer Lenkmodus 14 zur Erzeugung eines Seitenschwads 14c (Fig. 2) implementiert, vorzugsweise ferner ein zweiter, wahlweise aktivierbarer Lenkmodus 15 zur Erzeugung von Einzelschwaden (nicht dargestellt) und/oder ein dritter, wahlweise aktivierbarer Lenkmodus 16 für Transportfahrten (entsprechende Geradeausstellung des Kreiselschwaders 2 siehe Fig. 3) und/oder ein vierter wahlweise aktivierbarer Lenkmodus 17 für Rückwärtsfahrten (nicht dargestellt).

Der vierte Lenkmodus 17 lässt sich, sofern implementiert, vorzugsweise nur ausgehend vom dritten Lenkmodus 16 bzw. bei Transportfahrt anwählen. Die ersten bis dritten Lenkmodi 14 bis 16 schließen sich gegenseitig aus, sodass jeweils nur einer davon angewählt werden kann.

Im ersten Lenkmodus 14 regelt die Regeleinheit 13 die Hydraulikzufuhr 11a zum ersten Lenkzylinder 11 derart, dass der Istwert 8a des Anlenkwinkels 8 sich einem vom (gemessenen) Istwert 10a des Nachlaufwinkels 10 abhängigen ersten Sollwert 8b annähert und im Idealfall angleicht. Der erste Sollwert 8b liegt beispielsweise in einem Bereich zwischen vollständig eingefahrenem ersten Lenkzylinder 11 und seiner (demgegenüber zur Hälfte ausgefahrenen) Mittelstellung.

Der erste Lenkmodus 14 dient zur Spurkorrektur der hinteren Kreiseleinheit 5 bei Kurvenfahrten 14a (Fig. 2) nach links während Seitenschwadablage, wobei in der Regeleinheit 13 für unterschiedliche Werte oder Bereiche des Nachlaufwinkels 10 ein jeweils dazu passender erster Sollwert 8b aus einer gespeicherten Wertetabelle ausgewählt und/oder mittels geeigneter Algorithmen berechnet werden kann.

Demzufolge wird je nach Fahrsituation durch automatische Annäherung des Istwerts 8a an den jeweiligen ersten Sollwert 8b die Fahrspur der hinteren Kreiseleinheit 5 bei deren Linksversatz 14b bezüglich der vorderen Kreiseleinheit 2 und bei Kurvenfahrten 14a automatisch zur Kurvenaußenseite hin korrigiert, also in Abhängigkeit vom jeweils gemessenen Nachlaufwinkel 10.

Dies bewirkt, dass vom Rechenkreisel 4c der vorderen Kreiseleinheit 4 aufgenommenes Erntegut effektiv an den Rechenkreisel 5c der hinteren Kreiseleinheit 5 übergeben und als gemeinsamer Seitenschwad 14c abgelegt wird, der in der Fig. 2 schematisch angedeutet ist.

Im zweiten Lenkmodus 15 regelt die Regeleinheit 13 die Hydraulikzufuhr 11a derart, dass sich der Istwert 8a des Anlenkwinkels 8 einem vom (gemessenen) Ist-Wert 10a des Nachlaufwinkels 10 abhängigen zweiten Sollwert 8c annähert. Der zweite Sollwert 8c liegt beispielsweise in einem Bereich zwischen vollständig ausgefahrenem ersten Lenkzylinder 11 und seiner (demgegenüber zur Hälfte eingefahren) Mittelstellung.

Auch dies bewirkt eine Spurkorrektur der hinteren Kreiseleinheit 5, allerdings bei deren Rechtsversatz (nicht dargestellt) bezüglich der vorderen Kreiseleinheit 2 und bei Kurvenfahrten nach rechts (nicht dargestellt), um den seitlichen Abstand der Schwadablage in geeigneten Bereichen zu halten und insbesondere zu optimieren, analog zu dem für den ersten Lenkmodus 14 beschriebenen Regelungsprinzip.

Im dritten Lenkmodus 16 steuert die Regeleinheit 13 die Hydraulikzufuhr 11a derart, dass der Istwert 8a des Anlenkwinkels 8 im Wesentlichen auf null, also auf Geradeausstellung der hinteren Kreiseleinheit 5 bezüglich des Längsträgers 6, eingestellt und die Hydraulikzufuhr 11a zum Lenkzylinder 11 dann abgesperrt wird, um dessen Stellung gegenüber äußeren Krafteinwirkungen zu verriegeln.

Im vierten Lenkmodus 17 regelt die Regeleinheit 13 die Hydraulikzufuhr 11a des ersten Lenkzylinders 11, um den Istwert 10a des Nachlaufwinkels 10 (auf diese Weise indirekt) zu minimieren, also möglichst auf null einzustellen, entsprechend einer Geradeausstellung des Längsträgers 6 bezüglich der vorderen Kreiseleinheit 4 bzw. der Zugdeichsel 3. Diese Winkelminimierung dient dazu, das Fahrverhalten des Kreiselschwaders 2 bei Rückwärtsfahrten demjenigen eines Einachsanhängers anzunähern und möglichst anzugleichen.

Alternativ oder ergänzend könnte auch der zweite Lenkzylinder 12 von der Regeleinheit 13 zur (direkten) Minimierung des Nachlaufwinkels 10 bei Rückwärtsfahrt angesteuert werden.

Der erste Lenkzylinder 11 und gegebenenfalls der zweite Lenkzylinder 12 werden auf der Grundlage der Sensoren 7, 9 elektronisch gesteuert im Gegensatz zu einer hydraulischen Steuerung mittels eines hydraulischen Geberzylinders und/oder mittels mechanischer Steuerung durch Kulissen oder dergleichen. Die beschriebene Spurkorrektur der hinteren Kreiseleinheit 5 im ersten und/oder zweiten Lenkmodus 14, 15 ist durch eine derartige elektronische Regelung mit relativ geringem apparativen Aufwand möglich und durch Programmierung der Regeleinheit 13 zudem flexibel an die jeweiligen Anforderungen anpassbar.

Zur Unterstützung des vierten Lenkmodus 17 kann das System 1 einen optionalen dritten Sensor 18 umfassen zur Messung eines Schubrichtungswinkels 19, der zwischen der Längsachse 3a der Zugdeichsel 3 und einer damit gelenkig verbundenen Anhängevorrichtung 20 bzw. der Fahrtrichtung 31 (orthogonal zur quer ausgerichteten Anhängevorrichtung 20) eines zugeordneten Schleppers 30 gebildet wird. Wie die Fig. 2 erkennen lässt, ist die Anhängevorrichtung 20 beispielsweise als Anhängeschiene ausgebildet und kann dann auf bekannte Weise an einen Schlepper 30 gekoppelt werden, beispielsweise durch Verankerung an den Unterlenkern einer Dreipunktbefestigung.

Der dritte Sensor 18 ist vor allem im Stand bzw. beim rückwärtigen Anfahren vorteilhaft und liefert dann beispielsweise wenigstens einen Istwert 19a (Fig. 1) des Schubrichtungswinkels 19 an die Regeleinheit 13.

Gemäß Fig. 1 kann das System 1 zur Steuerung der Hydraulikzufuhr 11a zum ersten Lenkzylinder 11 ein Wegeventil 21 und ein Sperrventil 22 umfassen, die jeweils von der Regeleinheit 13 elektronisch angesteuert werden. Das Wegeventil 21 und das Sperrventil 22 sind zwischen den ersten Lenkzylinder 11 und die zugeordnete Schlepperhydraulik 32 (des Schleppers 30) geschaltet und können am Kreiselschwader 2 angeordnet sein.

Das System 1 umfasst zudem ein Bedienterminal 23, mit dem die Regeleinheit 13 bedient wird, beispielsweise um einen der beschriebenen Lenkmodi 14 bis 17 auszuwählen. Das Bedienterminal 23 kann prinzipiell Bestandteil des Kreiselschwaders 2 sein, ist vorzugsweise aber am zugeordneten Schlepper 30 angeordnet, sodass es von dessen Fahrer während der Fahrt bedient werden kann. Denkbar wäre zudem, das Bedienterminal 23 in Form eines Mobilfunkgeräts oder dergleichen bereitzustellen.

Das System 1 kann zudem einen berührungslos die befahrene Umgebung beispielsweise optisch oder per Radar abtastenden vierten Sensor 24 umfassen, um damit die Fahrgeschwindigkeit und/oder eine Rückwärtsfahrt zu erkennen und/oder zu überwachen und den vierten Lenkmodus 17 davon abhängig auszulösen bzw. zuzuschalten. Der vierte Sensor 24 kann beispielsweise mit der Regeleinheit 13 und/oder dem Bedienterminal 23 per Funk oder mittels geeigneter Verdrahtung per ISOBUS kommunizieren. Prinzipiell könnten Signale zur Erkennung und/oder Überwachung einer Rückwärtsfahrt auch auf andere Weise vom zugeordneten Schlepper 30 empfangen werden.

Mit dem System 1 kann beispielsweise wie folgt gearbeitet werden:
Die erforderliche Lenkkraft am Lenkzylinder 11 wird mittels der zugeordneten Schlepperhydraulik 32 erzeugt. Diese wird hierfür (in Arbeitsstellung) auf konstanten Ölumlauf geschaltet, beispielsweise nach dem Prinzip "Open Center", idealerweise nach dem Prinzip "Closed Center". Eine ständige Bereitstellung von Hydrauliköl ist nicht erforderlich und führt bei Open-Center-Systemen zum Aufheizen und reduziert den Wirkungsgrad. Nur bei einem bestimmten Lenkwinkel (entsprechend dem dargestellten Schubrichtungswinkel 19) und Einwirkdauer (Bandbreite) erkennt das System 1 (mittels eines geeigneten Algorithmus) eine Kurvenfahrt und aktiviert den Hydraulikstrom. So werden ständige, unnötige Lenkkorrekturen vermieden.

Am Bedienterminal 23 wählt der Fahrer eine gewünschte Arbeitsstrategie aus, also beispielsweise einen der beschriebenen Lenkmodi 14 bis 17. Diese Auswahl wird beispielsweise mittels ISOBUS an die Regeleinheit 13 übertragen. Der Kreiselschwader 2 kann hierzu einen geeigneten Anschluss (nicht dargestellt) für das Bedienterminal 23 aufweisen. Der Anschluss kann für einen internen, externen (beispielsweise zum Schlepper), drahtgestützten und/oder drahtlosen Anschluss des Bedienterminals 23 ausgebildet sein.

Nach Auswahl des dritten Lenkmodus 16, also bei einer Transportfahrt, ermittelt der erste Sensor 7 laufend den Istwert 8a des Anlenkwinkels 8, gegebenenfalls auch indirekt über die aktuelle Stellung des ersten Lenkzylinders 11, und leitet die entsprechenden Sensorwerte zur Regeleinheit 13. Diese steuert die Hydraulikzufuhr 11a beispielsweise über das Wegeventil 21 so, dass der Lenkzylinder 11 seine Position für die Transportfahrt erreicht, also Geradeausstellung der hinteren Kreiseleinheit 5. Das Sperrventil 22 verriegelt diese Lenkzylinderstellung gegen äußere Krafteinwirkungen.

Wenn die Fahrwerk- und Deichselzylinder für die Transportfahrt ganz ausfahren und druckbeaufschlagt sind, kann so ein weiteres Überwachungssignal erzeugt werden, um den dritten Lenkmodus 16 zu bestätigen.

Nach Auswahl des ersten Lenkmodus 14, also zur Erzeugung eines Seitenschwads 14c, fährt der Lenkzylinder 11 zuerst zumindest teilweise ein, gegebenenfalls aber auch vollständig. Während der Fahrt werden der Anlenkwinkel 8 und der Nachlaufwinkel 10 dann mittels der zugeordneten ersten und zweiten Sensoren 7, 9 und der Regeleinheit 13 laufend ermittelt.

Bei Kurvenfahrt (hier Linkskurvenfahrt) variiert in der Regel der Istwert 10a des Nachlaufwinkels 10. Diesem sind für einzelne Winkelwerte und/oder Winkelbereiche in der Regeleinheit 13 erste Sollwerte 8b des Anlenkwinkels 8 zugeordnet. Weicht der jeweilige Istwert 8a des Anlenkwinkels 8 vom gerade zugeordneten ersten Sollwert 8b ab, so steuert die Regeleinheit 13 das Wegeventil 21 derart an, dass der erste Lenkzylinder 11 von der Schlepperhydraulik 32 betätigt und somit dazu passend verstellt wird, wodurch sich der Anlenkwinkel 8 verändert, bis sein Istwert 8a den jeweils gültigen ersten Sollwert 8b erreicht oder sich diesem zumindest in geeignetem Ausmaß angenähert hat.

Anders gesagt wird das Wegeventil 21 dann so angesteuert, dass der erste Lenkzylinder 11 bis zu einem vorgegebenen Korrekturwert ausfährt, welcher sich aus einem Abgleich mit dem vom ersten Sensor 7 jeweils ermittelten Istwert 8a ergibt. Der beschriebene Regelkreis optimiert so die Kreiselüberlappung und folglich die Schwadübergabe zwischen der vorderen und hinteren Kreiseleinheit 4, 5. Der Nachlaufwinkel 10 ergibt sich aus der Schleppkurve des vorderen Kreiselfahrwerks 4a und ändert sich nur unter normaler Fahrt. Bei Stillstand und Kriechtempo soll keine Regelung erfolgen. Die Regelung des Wegeventils 21 kann proportional zur Fahrgeschwindigkeit erfolgen.

Nach Auswahl des zweiten Lenkmodus 15, also bei Erzeugung zweier Einzelschwade, fährt der erste Lenkzylinder 11 zuerst zumindest teilweise aus, gegebenenfalls aber auch vollständig. Während der Fahrt werden der Anlenkwinkel 8 und der Nachlaufwinkel 10 dann wiederum mittels der zugeordneten ersten und zweiten Sensoren 7, 9 und der Regeleinheit 13 laufend ermittelt. Ein in der Fig. 3 beispielhaft abgebildeter hinterer Schwadformer 2a ist dann aus dem potentiellen Kollisionsbereich nach oben eingeschwenkt.

Bei Kurvenfahrt (hier Rechtskurvenfahrt) variiert in der Regel der Istwert 10a des Nachlaufwinkels 10. Diesem sind für einzelne Winkelwerte und/oder Winkelbereiche in der Regeleinheit 13 zweite Sollwerte 8c des Anlenkwinkels 8 zugeordnet. Weicht der jeweilige Istwert 8a des Anlenkwinkels 8 vom gerade zugeordneten zweiten Sollwert 8c ab, so steuert die Regeleinheit 13 das Wegeventil 21 derart an, dass der erste Lenkzylinder 11 von der Schlepperhydraulik 32 betätigt und somit dazu passend verstellt wird, wodurch sich der Anlenkwinkel 8 verändert, bis sein Istwert 8a den jeweils gültigen zweiten Sollwert 8c erreicht oder sich diesem zumindest in geeignetem Ausmaß angenähert hat.

Anders gesagt wird das Wegeventil 21 dann so angesteuert, dass der erste Lenkzylinder 11 bis zu einem vorgegebenen Korrekturwert einfährt, welcher sich aus einem Abgleich mit dem vom ersten Sensor 7 jeweils ermittelten Istwert 8a ergibt. Der beschriebene Regelkreis optimiert so die Spur der hinteren Kreiseleinheit 5 und demzufolge den Abstand der Schwadablage an der vorderen und hinteren Kreiseleinheit 4, 5 zueinander.

Im Prinzip unabhängig von der beschriebenen elektronischen Spurkorrektur im ersten und/oder zweiten Lenkmodus 14, 15 ermöglicht das System 1 im vierten Lenkmodus 17 eine vereinfachte Handhabung des Kreiselschwaders 2 bei Rückwärtsfahrt, wofür ansonsten relativ viel Übung des Fahrers erforderlich ist. Dabei wird die Handhabung an einen Einachsanhänger angenähert.

Der vierte Lenkmodus 17 ist vorzugsweise nur in Transportstellung, beispielsweise ausgehend vom dritten Lenkmodus 16, und bei Umlaufhydraulik aktivierbar. Beispielsweise erkennt der vierte Sensor 24 und/oder oder der Schlepper 30 eine Rückwärtsfahrt und zugehörige Geschwindigkeit und übermittelt ein entsprechendes Signal an die Regeleinheit 13, um die Rückwärtssteuerung im vierten Lenkmodus 17 (nach deren Auswahl) zuzuschalten und beispielsweise wie folgt durchzuführen.

Ändert sich bei der Rückwärtsfahrt der Schubrichtungswinkel 19 zwischen der Fahrtrichtung 31 des Schleppers 30 und der Zugdeichsel 3, erzeugt dies ein Signal am dritten Sensor 18, der dann vorzugsweise als Winkelsensor (Drehgeber) ausgebildet ist.

Die jeweilige Achsrichtung 5f der hinteren Kreiseleinheit 5 bewirkt bei der weiteren Rückwärtsfahrt eine Änderung des Nachlaufwinkels 10, dessen Istwert 10a vom zweiten Sensor 9 dabei erfasst und an die Regeleinheit 13 übertragen wird.

Dem Nachlaufwinkel 10 sind dann für einzelne Winkelwerte und/oder Winkelbereiche in der Regeleinheit 13 dritte Sollwerte 8d des Anlenkwinkels 8 zugeordnet. Weicht der jeweilige Istwert 8a des Anlenkwinkels 8 vom gerade zugeordneten dritten Sollwert 8d ab, so steuert die Regeleinheit 13 das Wegeventil 21 derart an, dass der erste Lenkzylinder 11 von der Schlepperhydraulik 32 betätigt und somit dazu passend verstellt wird, wodurch sich der Nachlaufwinkel 10 verringert, vorzugsweise bis sein Istwert 10a null erreicht, also bis die Zugdeichsel 3 und der Längsträger 6 parallel zueinander ausgerichtet sind.

Die beschriebene Lenkkorrektur für Rückwärtsfahrt könnte prinzipiell über den zweiten Lenkzylinder 12 an der vorderen Kreiseleinheit 4 erfolgen oder durch dessen geeignete Ansteuerung unterstützt werden.

Der zweite Lenkzylinder 12 kann ansonsten bzw. bei Vorwärtsfahrt auf prinzipiell bekannte Weise schlepperseitig gesteuert werden, was daher nicht im Detail beschrieben ist.

Für den Fahrer stellt die Rückwärtsfahrt um eine Kurve eine besondere Herausforderung dar. Das System 1 kann daher eine Rückfahrhilfe umfassen, die Hilfslinien für eine prognostizierte Route der Rückwärtsfahrt im Display des Bedienterminals 23 einblendet, damit ein möglichst idealer Lenkeinschlag gewählt und mehrfaches Vor- und Zurücksetzen vermieden werden kann.

Dazu ist vorzugsweise eine Kamera (nicht dargestellt) am Schlepperheck angeordnet, die das Anbaugerät (Kreiselschwader) fokussiert und die Position der Kreiseleinheiten 4 und 5 registriert. Optische Markierungen auf den Kreiseleinheiten 4 ,5 können eine solche Positionsbestimmung erleichtern.

Ferner wird ein Lenksensorsignal vom Schlepper 30 bereitgestellt und mit den Sensorwerten der Deichselstellung, hier mit wenigstens einem Istwert 19a des Schubrichtungswinkels 19, und mit den durch Bildauswertung der Kamerabilder (s. o.) ermittelten Positionen der Kreiseleinheiten 4, 5 in der Regeleinheit 13 vergleichend ausgewertet und mit jeweiligen Sollwerten abgeglichen. Solche Sollwerte können auf KI-Datenbanken basieren, wodurch beispielsweise auch Hindernisse im Kamerabild erkannt und Alarmhinweise gegeben werden können.

Der Lenkzylinder 11 wird dann zusätzlich so gesteuert, dass die Rückwärts-Kurvenfahrt sich den Hilfslinien der Rückfahrhilfe annähert und so den Fahrer entlastet.

## Patentansprüche

1. System (1) zur Lenkungsregelung eines gezogenen Seitenschwaders (2) mit einer vorderen und einer hinteren Kreiseleinheit (4, 5), die mittels eines Längsträgers (6) gelenkig verbunden sind, und mit einer an der vorderen Kreiseleinheit (4) angeordneten Zugdeichsel (3), wobei das System (1) umfasst:
- einen ersten Sensor (7) zum Messen eines zwischen dem Längsträger (6) und dem Fahrwerk (5a) der hinteren Kreiseleinheit (5) gebildeten Anlenkwinkels (8);
- einen zweiten Sensor (9) zum Messen eines zwischen dem Längsträger (6) und der Zugdeichsel (3) gebildeten Nachlaufwinkels (10);
- einen hydraulischen Lenkzylinder (11) zum Einstellen des Anlenkwinkels (8); und
- eine elektronische Regeleinheit (13) zur Regelung der Hydraulikzufuhr (11a) zum Lenkzylinder (11),
wobei die Regeleinheit (13) eingerichtet ist, die Hydraulikzufuhr (11a) derart zu regeln, dass sich der Istwert (8a) des Anlenkwinkels (8) in einem wahlweise aktivierbaren ersten Lenkmodus (14) zur Erzeugung eines Seitenschwads einem vom gemessenen Nachlaufwinkel (10) abhängigen ersten Sollwert (8b) annähert.

2. System nach Anspruch 1, wobei der erste Lenkmodus (14) derart in der Regeleinheit (13) implementiert ist, dass die Fahrspur der hinteren Kreiseleinheit (5) bei deren Linksversatz bezüglich der vorderen Kreiseleinheit (4) und bei Kurvenfahrten nach links automatisch in Abhängigkeit vom gemessenen Nachlaufwinkel (10), in Fahrtrichtung gesehen, nach rechts hin korrigiert wird.

3. System nach einem der vorigen Ansprüche, wobei die Regeleinheit (13) ferner eingerichtet ist, die Hydraulikzufuhr (11a) derart zu regeln, dass sich der Istwert (8a) des Anlenkwinkels (8) in einem zweiten wahlweise aktivierbaren Lenkmodus (15) zur Erzeugung von Einzelschwaden einem vom Ist-Wert (10a) des Nachlaufwinkels (10) abhängigen zweiten Sollwert (8c) annähert.

4. System nach einem der vorigen Ansprüche, wobei die Regeleinheit (13) ferner eingerichtet ist, die Hydraulikzufuhr (11a) derart zu steuern, dass der Istwert (8a) des Anlenkwinkels (8) in einem dritten wahlweise aktivierbaren Lenkmodus (16) für Transportfahrten im Wesentlichen auf null eingestellt und die Hydraulikzufuhr (11a) zum Lenkzylinder (11) dann abgesperrt wird.

5. System nach einem der vorigen Ansprüche, wobei die Regeleinheit (13) ferner eingerichtet ist, die Hydraulikzufuhr (11a) derart zu steuern, dass sich der Istwert (10a) des Nachlaufwinkels (10) in einem vierten wahlweise aktivierbaren Lenkmodus (17) für Rückwärtsfahrten einem vorgegebenen Minimalwert, insbesondere null, annähert.

6. System nach einem der vorigen Ansprüche, ferner mit einem dritten Sensor (18) zum Messen eines Schubrichtungswinkels (19) zwischen der Zugdeichsel (3) und einer an einen Schlepper (30) koppelbaren Anhängevorrichtung (20), wobei die Regeleinheit (13) ferner eingerichtet ist, die Hydraulikzufuhr (11a) derart zu steuern, dass: sich der Istwert (10a) des Nachlaufwinkels (10) bei Rückwärtsfahrt und Vergrößerung des Schubrichtungswinkels (19) verkleinert und insbesondere Null annähert; und/oder die Hydraulikzufuhr (11a) nur dann aktiviert wird, wenn mittels des dritten Sensors (18) eine Kurvenfahrt festgestellt wird; und/oder die Hydraulikzufuhr (11a) zum einen nicht im Stillstand und zum anderen proportional zur Fahrgeschwindigkeit erfolgt.

7. Seitenschwader (2) umfassend ein System (1) nach wenigstens einem der vorigen Ansprüche und einen Anschluss zur Verbindung der Regeleinheit (13) mit einem insbesondere an einem Schlepper (30) angeordneten und/oder im Form eines Mobilfunkgeräts bereitgestellten Bedienterminal (23).

8. Verfahren zur Lenkungsregelung eines gezogenen Seitenschwaders (2) mit einer vorderen und einer hinteren Kreiseleinheit (4, 5), die mittels eines Längsträgers (6) gelenkig verbunden sind, und mit einer an der vorderen Kreiseleinheit (4) angeordneten Zugdeichsel (3), wobei jeweils laufend:
- ein Istwert (8a) eines zwischen dem Längsträger (6) und dem Fahrwerk (5a) der hinteren Kreiseleinheit (5) gebildeten Anlenkwinkels (8) gemessen wird;
- ein Istwert (10a) eines zwischen dem Längsträger (6) und der Zugdeichsel (3) gebildeten Nachlaufwinkels (10) gemessen wird;
- der Anlenkwinkel (8) mittels eines hydraulischen Lenkzylinders (11) eingestellt wird; und
- die Hydraulikzufuhr (11a) zum Lenkzylinder (11) elektronisch geregelt wird,
wobei die Hydraulikzufuhr (11a) derart geregelt wird, dass sich der Istwert (8a) des Anlenkwinkels (8) infolge einer Aktivierung eines ersten elektronischen Lenkmodus (14) zur Erzeugung eines Seitenschwads laufend einem vom jeweiligen Istwert (10a) des Nachlaufwinkels (10) abhängigen ersten Sollwert (8b) annähert.

9. Verfahren nach Anspruch 8, wobei die Fahrspur der hinteren Kreiseleinheit (5) bei deren Linksversatz bezüglich der vorderen Kreiseleinheit (4) und bei Kurvenfahrten nach links im ersten Lenkmodus (14) automatisch zur Kurvenaußenseite hin in Abhängigkeit vom Ist-Wert (10a) des Nachlaufwinkels (10) korrigiert wird.

10. Verfahren nach Anspruch 8 oder 9, wobei die Hydraulikzufuhr (11a) infolge einer Aktivierung eines zweiten elektronischen Lenkmodus (15) zur Erzeugung von Einzelschwaden derart geregelt wird, dass sich der Istwert (8a) des Anlenkwinkels (8) einem vom Ist-Wert (10a) des Nachlaufwinkels (10) abhängigen zweiten Sollwert (8c) annähert.

11. Verfahren nach einem der Ansprüche 8 bis 10, wobei die Hydraulikzufuhr (11a) infolge einer Aktivierung eines dritten elektronischen Lenkmodus (16) für Transportfahrten derart gesteuert wird, dass der Istwert (8a) des Anlenkwinkels (8) auf null eingestellt und die Hydraulikzufuhr (11a) zum Lenkzylinder (11) dann abgesperrt wird.

12. Verfahren nach einem der Ansprüche 8 bis 11, wobei die Hydraulikzufuhr (11a) infolge einer Aktivierung eines vierten elektronischen Lenkmodus (17) für Rückwärtsfahrten derart gesteuert wird, dass sich der Istwert (10a) des Nachlaufwinkels (10) einem vorgegebenen Minimalwert, insbesondere Null, annähert.

13. Verfahren nach einem der Ansprüche 8 bis 12, wobei ein zwischen einer an der vorderen Kreiseleinheit (4) angeordneten Zugdeichsel (3) und einer an einen Schlepper (30) koppelbaren Anhängevorrichtung (20) gebildeter Schubrichtungswinkel (19) gemessen wird, und wobei die Hydraulikzufuhr (11a) derart gesteuert wird, dass sich der Istwert (10a) des Nachlaufwinkels (10) bei Rückwärtsfahrt und Vergrößerung des Schubrichtungswinkels (19) verkleinert und insbesondere Null annähert.

14. Verfahren nach einem der Ansprüche 8 bis 13, wobei der erste Lenkmodus (14) an einem Bedienterminal (23) aktiviert wird, welches an einem den Seitenschwader (2) ziehenden Schlepper (30) angeordnet ist und/oder per Funkverbindung angeschlossen ist.

15. Verfahren nach einem der Ansprüche 8 bis 14, wobei ermittelt wird, ob der jeweils vorgewählte Lenkmodus (14, 15, 16, 17) mit Werten des gemessenen Anlenkwinkels (8) und/oder Nachlaufwinkels (10) und/oder Schubrichtungswinkels (19) und/oder mit Messwerten eines Geschwindigkeits- und Fahrtrichtungssensors (24) übereinstimmt, und wobei bei demnach fehlender Übereinstimmung ein optisches und/oder akustisches Warnsignal ausgegeben wird und/oder wenigstens ein kritischer Betriebszustand automatisch verhindert wird, insbesondere indem ein Schwadformer (2a) automatisch aus einer Kollisionsebene geschwenkt wird.

## Claims

1. System (1) for steering control of a pulled side rake (2) with a front and a rear rotary unit (4, 5), which are joint connected by means of a longitudinal member (6), and with a drawbar (3) arranged on the front rotary unit (4), the system (1) comprising:
- a first sensor (7) for measuring an articulation angle (8) formed between the longitudinal member (6) and the chassis (5a) of the rear rotary unit (5);
- a second sensor (9) for measuring a caster angle (10) formed between the longitudinal member (6) and the drawbar (3);
- a hydraulic steering cylinder (11) for adjusting the articulation angle (8); and
- an electronic control unit (13) for controlling the hydraulic supply (11a) to the steering cylinder (11),
wherein the control unit (13) is arranged to control the hydraulic supply (11a) in such a way that the actual value (8a) of the articulation angle (8) in a selectively activatable first steering mode (14) for generating a lateral swath approaches a first setpoint value (8b) dependent on the measured caster angle (10).

2. System according to claim 1, wherein the first steering mode (14) is implemented in the control unit (13) in such a way that the track of the rear rotary unit (5) is automatically corrected to the right as a function of the measured caster angle (10), viewed in the direction of travel, when the rear rotary unit (5) is offset to the left with respect to the front rotary unit (4) and when cornering to the left.

3. System according to one of the preceding claims, wherein the control unit (13) is furthermore set up to control the hydraulic supply (11a) in such a way that the actual value (8a) of the steering angle (8) in a second steering mode (15), which can be activated as desired, for generating individual swaths approaches a second setpoint value (8c) which is dependent on the actual value (10a) of the caster angle (10).

4. System according to one of the preceding claims, wherein the control unit (13) is further arranged to control the hydraulic supply (11a) in such a way that the actual value (8a) of the steering angle (8) in a third optionally activatable steering mode (16) for transport travel is set essentially to zero and the hydraulic supply (11a) to the steering cylinder (11) is then shut off.

5. System according to one of the preceding claims, wherein the control unit (13) is furthermore set up to control the hydraulic supply (11a) in such a way that the actual value (10a) of the caster angle (10) approaches a predetermined minimum value, in particular zero, in a fourth optionally activatable steering mode (17) for reverse travel.

6. System according to one of the preceding claims, further comprising a third sensor (18) for measuring a thrust direction angle (19) between the drawbar (3) and a hitch (20) which can be coupled to a tractor (30), wherein the control unit (13) is further arranged to control the hydraulic supply (11a) in such a way that: the actual value (10a) of the caster angle (10) decreases and, in particular, approaches zero during reverse travel and increase of the thrust direction angle (19); and/or the hydraulic supply (11a) is only activated when cornering is detected by means of the third sensor (18); and/or the hydraulic supply (11a) is, on the one hand, not carried out at a standstill and, on the other hand, proportional to the travel speed.

7. Side rake (2) comprising a system (1) according to at least one of the preceding claims and a connection for connecting the control unit (13) to an operator terminal (23) arranged in particular on a tractor (30) and/or provided in the form of a mobile radio device.

8. Method for steering control of a trailed side rake (2) with a front and a rear rotary unit (4, 5), which are articulatedly connected by means of a longitudinal member (6), and with a drawbar (3) arranged on the front rotary unit (4), wherein in each case running:
- an actual value (8a) of an articulation angle (8) formed between the longitudinal member (6) and the running gear (5a) of the rear rotary unit (5) is measured;
- an actual value (10a) of a caster angle (10) formed between the longitudinal member (6) and the drawbar (3) is measured;
- the steering angle (8) is set by means of a hydraulic steering cylinder (11); and
- the hydraulic supply (11a) to the steering cylinder (11) is electronically controlled,
wherein the hydraulic supply (11a) is controlled in such a way that the actual value (8a) of the steering angle (8) continuously approaches a first setpoint value (8b) dependent on the respective actual value (10a) of the caster angle (10) as a result of activation of a first electronic steering mode (14) for generating a side swath.

9. Method according to claim 8, wherein the track of the rear rotary unit (5) is automatically corrected towards the outside of the curve as a function of the actual value (10a) of the caster angle (10) when the rear rotary unit (5) is offset to the left with respect to the front rotary unit (4) and when cornering to the left in the first steering mode (14).

10. Method according to claim 8 or 9, wherein the hydraulic supply (11a) is controlled as a result of an activation of a second electronic steering mode (15) for generating individual swaths in such a way that the actual value (8a) of the steering angle (8) approaches a second setpoint value (8c) dependent on the actual value (10a) of the caster angle (10).

11. Method according to one of claims 8 to 10, wherein the hydraulic supply (11a) is controlled as a result of an activation of a third electronic steering mode (16) for transport travel such that the actual value (8a) of the steering angle (8) is set to zero and the hydraulic supply (11a) to the steering cylinder (11) is then shut off.

12. Method according to one of claims 8 to 11, wherein the hydraulic supply (11a) is controlled as a result of an activation of a fourth electronic steering mode (17) for reversing in such a way that the actual value (10a) of the caster angle (10) approaches a predetermined minimum value, in particular zero.

13. Method according to one of claims 8 to 12, wherein a thrust direction angle (19) formed between a drawbar (3) arranged on the front rotary unit (4) and a towing device (20) which can be coupled to a tractor (30) is measured, and wherein the hydraulic supply (11a) is controlled in such a way that the actual value (10a) of the caster angle (10) decreases and in particular approaches zero during reverse travel and increase of the thrust direction angle (19).

14. Method according to any one of claims 8 to 13, wherein the first steering mode (14) is activated at an operator terminal (23) which is arranged on a tractor (30) pulling the side rake (2) and/or is connected by radio link.

15. Method according to any one of claims 8 to 14, wherein it is determined whether the respectively preselected steering mode (14, 15, 16, 17) corresponds to values of the measured steering angle (8) and/or caster angle (10) and/or thrust direction angle (19) and/or to measured values of a speed and driving direction sensor (24), and wherein, in the event of a lack of correspondence, an optical and/or acoustic warning signal is emitted and/or at least one critical operating state is automatically prevented, in particular in that a swath former (2a) is automatically pivoted out of a collision plane.

## Revendications

1. Système (1) pour commander la direction d'un andaineur latéral tracté (2) comprenant une unité rotative avant et une unité rotative arrière (4, 5) qui sont reliées de manière articulée au moyen d'un longeron (6), et un timon (3) disposé sur l'unité rotative avant (4), le système (1) comprenant :
- un premier capteur (7) pour mesurer un angle de braquage (8) formé entre le longeron (6) et le châssis (5a) de l'unité rotative arrière (5) ;
- un deuxième capteur (9) pour mesurer un angle de chasse (10) formé entre le longeron (6) et le timon (3) ;
- un vérin de direction hydraulique (11) pour régler l'angle de braquage (8) ; et
- une unité de commande électronique (13) pour réguler l'alimentation hydraulique (11a) du vérin de direction (11),
l'unité de commande (13) étant conçue pour réguler l'alimentation hydraulique (11a) de telle sorte que la valeur réelle (8a) de l'angle de braquage (8) dans un premier mode de direction (14) pouvant être activé au choix pour produire un andain latéral se rapproche d'une première valeur de consigne (8b) dépendant de l'angle de mesuré (10).

2. Système selon la revendication 1, le premier mode de direction (14) étant implémenté dans l'unité de commande (13) de telle sorte que la trajectoire de l'unité rotative arrière (5) soit automatiquement corrigée vers la droite lors de son décalage vers la gauche par rapport à l'unité rotative avant (4) et lors de virages vers la gauche, en fonction de l'angle de chasse mesuré (10), vu dans le sens de la marche.

3. Système selon l'une des revendications précédentes, l'unité de commande (13) étant en outre conçue pour réguler l'alimentation hydraulique (11a) de telle sorte que la valeur réelle (8a) de l'angle de braquage (8) dans un deuxième mode de direction (15) pouvant être activé au choix pour produire des andains individuels se rapproche d'une deuxième valeur de consigne (8c) dépendant de la valeur réelle (10a) de l'angle de chasse (10).

4. Système selon l'une des revendications précédentes, dans lequel l'unité de commande (13) est en outre conçue pour commander l'alimentation hydraulique (11a) de telle sorte que la valeur réelle (8a) de l'angle de braquage (8) dans un troisième mode de direction (16) pouvant être activé au choix pour les déplacements de transfert soit réglée essentiellement sur zéro et que l'alimentation hydraulique (11a) vers le vérin de direction (11) est alors bloquée.

5. Système selon l'une des revendications précédentes, dans lequel l'unité de commande (13) est en outre conçue pour commander l'alimentation hydraulique (11a) de telle sorte que la valeur réelle (10a) de l'angle de chasse (10) dans un quatrième mode de direction (17) pouvant être activé au choix pour les marches arrière se rapproche d'une valeur minimale prédéfinie, en particulier de zéro.

6. Système selon l'une des revendications précédentes, comprenant en outre un troisième capteur (18) pour mesurer un angle de poussée (19) entre le timon (3) et un dispositif d'attelage (20) pouvant être couplé à un tracteur (30), l'unité de commande (13) étant en outre conçue pour commander l'alimentation hydraulique (11a) de telle sorte que : la valeur réelle (10a) de l'angle de chasse (10) diminue lors d'une marche arrière et d'une augmentation de l'angle de poussée (19) et s'approche en particulier de zéro ; et/ou l'alimentation hydraulique (11a) n'est activée que lorsqu'un virage est détecté au moyen du troisième capteur (18) ; et/ou l'alimentation hydraulique (11a) n'a pas lieu à l'arrêt et est proportionnelle à la vitesse de déplacement.

7. Andaineur latéral (2) comprenant un système (1) selon au moins l'une des revendications précédentes et un raccordement pour relier l'unité de commande (13) à un terminal de commande (23) disposé en particulier sur un tracteur (30) et/ou fourni sous la forme d'un appareil de téléphonie mobile.

8. Procédé de régulation de la direction d'un andaineur latéral tracté (2) comprenant une unité rotative avant et une unité rotative arrière (4, 5) qui sont reliées de manière articulée au moyen d'un longeron (6), et un timon (3) disposé sur l'unité rotative avant (4), dans lequel, respectivement en continu :
- une valeur réelle (8a) d'un angle de braquage (8) formé entre le longeron (6) et le châssis (5a) de l'unité rotative arrière (5) est mesurée ;
- une valeur réelle (10a) d'un angle de chasse (10) formé entre le longeron (6) et le timon (3) est mesurée ;
- l'angle de braquage (8) est réglé au moyen d'un vérin de direction hydraulique (11) ; et
- l'alimentation hydraulique (11a) du vérin de direction (11) est régulée électroniquement,
l'alimentation hydraulique (11a) étant régulée de telle sorte que la valeur réelle (8a) de l'angle de braquage (8) se rapproche en permanence d'une première valeur de consigne (8b) dépendant de la valeur réelle respective (10a) de l'angle de chasse (10) à la suite de l'activation d'un premier mode de direction électronique (14) pour générer un andain latéral.

9. Procédé selon la revendication 8, dans lequel la trajectoire de l'unité rotative arrière (5) est automatiquement corrigée vers l'extérieur du virage en fonction de la valeur réelle (10a) de l'angle de chasse (10) lors de son décalage vers la gauche par rapport à l'unité rotative avant (4) et lors de virages vers la gauche dans le premier mode de direction (14).

10. Procédé selon la revendication 8 ou 9, dans lequel l'alimentation hydraulique (11a) est régulée à la suite de l'activation d'un deuxième mode de direction électronique (15) pour générer des andains individuels, de telle sorte que la valeur réelle (8a) de l'angle de braquage (8) se rapproche d'une deuxième valeur de consigne (8c) dépendant de la valeur réelle (10a) de l'angle de chasse (10).

11. Procédé selon l'une des revendications 8 à 10, dans lequel l'alimentation hydraulique (11a) est commandée, à la suite de l'activation d'un troisième mode de direction électronique (16) pour des déplacements de transfert à vitesse réduite de telle sorte que la valeur réelle (8a) de l'angle de braquage (8) soit réglée sur zéro et que l'alimentation hydraulique (11a) vers le vérin de direction (11) est alors bloquée.

12. Procédé selon l'une des revendications 8 à 11, dans lequel l'alimentation hydraulique (11a) est commandée, à la suite de l'activation d'un quatrième mode de direction électronique (17) pour les marches arrière, de telle sorte que la valeur réelle (10a) de l'angle de chasse (10) se rapproche d'une valeur minimale prédéfinie, en particulier de zéro.

13. Procédé selon l'une des revendications 8 à 12, dans lequel un angle de poussée (19) formé entre un timon (3) disposé sur l'unité rotative avant (4) et un dispositif d'attelage (20) pouvant être couplé à un tracteur (30) est mesuré, et dans lequel l'alimentation hydraulique (11a) est commandée de telle sorte que la valeur réelle (10a) de l'angle de chasse (10) diminue lors de la marche arrière et de l'augmentation de l'angle de poussée (19) et se rapproche en particulier de zéro.

14. Procédé selon l'une des revendications 8 à 13, dans lequel le premier mode de direction (14) est activé sur un terminal de commande (23) qui est disposé sur un tracteur (30) tirant l'andaineur latéral (2) et/ou est connecté par liaison radio.

15. Procédé selon l'une des revendications 8 à 14, dans lequel on détermine si le mode de direction présélectionné (14, 15, 16, 17) correspond aux valeurs de l'angle de braquage mesuré (8) et/ou de l'angle de chasse (10) et/ou de l'angle de poussée (19) et/ou avec les valeurs mesurées par un capteur de vitesse et de direction (24), et dans lequel, en cas de non-concordance, un signal d'avertissement optique et/ou acoustique est émis et/ou au moins un état de fonctionnement critique est automatiquement empêché, en particulier en pivotant automatiquement un formeur d'andains (2a) hors d'un plan de collision.
